# EUROPÄISCHE PATENTANMELDUNG

(11) **EP 1 229 166 A1**
(43) Veröffentlichungstag der Anmeldung: **07.08.2002**
(21) Anmeldenummer: 01102077.3
(22) Anmeldetag: 31.01.2001
(51) Int. Cl.: D21H 27/08, A47J 31/08

(54) **Verfahren zur Herstellung eines Filterpapieres**

(71) Anmelder: MELITTA HAUSHALTSPRODUKTE GmbH & Co. Kommanditgesellschaft, D-32427 Minden (DE)
(72) Erfinder: Dölfel, Rainer, Dr., 32457 Porta Westfalica (DE); Frank, Stephan, 59519 Möhnesee (DE)
(74) Vertreter: Dantz, Jan Henning

(57) **Zusammenfassung**

Gegenstand der Erfindung ist ein Verfahren zur Herstellung eines Filterpapieres, insbesondere eines Filterpapieres für die Zubereitung von Brühgetränken wie Kaffee oder Tee.

Der der vorliegenden Erfindung zugrunde liegende Gedanke besteht darin, zunächst ein ungekrepptes Papier hoher Festigkeit herzustellen und dieses Papier danach durch Perforation und/oder Prägung bzw. Prägeperforation filtrierfähig zu machen.

Der Vorteil der hohen Produktionsgeschwindigkeit der Papiermaschine resultiert aus der Tatsache, daß eine Kreppeinrichtung (Kreppzylinder, Kreppschaber) nicht mehr notwendig ist und somit der Engpaß der Maschinengeschwindigkeit beseitigt wird.

## Beschreibung

Die vorliegende Erfindung betrifft ein Verfahren zur Herstellung eines Filterpapieres, insbesondere eines Filterpapieres für die Zubereitung von Brühgetränken wie Kaffee oder Tee.

Filterpapiere, insbesondere Filterpapiere für die Zubereitung von Brühgetränken wie Kaffee oder Tee, werden bislang auf der Basis eines Standardsulfatzellstoffes in gekreppter Form hergestellt, um diese Papiere filtrierfähig und insoweit auch wasserdurchlässig oder flüssigkeitsdurchlässig zu machen.

Diese bekannten Filterpapiere haben sich grundsätzlich bestens bewährt, allerdings ist die Herstellungsgeschwindigkeit derartiger gekreppter Papiere auf entsprechenden Papiermaschinen relativ begrenzt, da der Kreppvorgang am Kreppzylinder die Maschinengeschwindigkeit limitiert.

Der vorliegenden Erfindung liegt die Aufgabe zugrunde, ein Verfahren zur Herstellung eines Filterpapieres, insbesondere eines Filterpapieres für die Zubereitung von Brühgetränken wie Kaffee oder Tee, aufzuzeigen, welches eine deutlich höhere Produktionsgeschwindigkeit auf der Papiermaschine zuläßt im Vergleich zu gekreppten Filterpapieren.

Diese Aufgabe wird erfindungsgemäß dadurch gelöst, daß zunächst ein ungekrepptes Papier hoher Festigkeit hergestellt und dieses Papier danach durch Perforation und/oder durch Prägung bzw. durch Prägeperforation filtrierfähig gemacht wird.

Der Vorteil dieses Verfahrens liegt darin, daß die Filtrationseigenschaften des Filterpapieres nicht mehr auf der Papiermaschine selbst durch Kreppung erzeugt werden, sondern es wird ein zunächst weitestgehend undurchlässiges und somit zumindest für die Kaffeefiltration ungeeignetes, hochfestes Papier hergestellt und nachträglich filtrierfähig gemacht, sei es durch Perforation oder andere Lochungsverfahren oder durch Prägung bzw. eine Kombination aus Perforation und Prägung.

Damit entfallen die kreppbedingten Geschwindigkeitslimits der Papiermaschine und die Produktionsleistung kann deutlich gesteigert werden. Eine Perforation des Papieres kann durch Nadelung oder durch andere Lochungsverfahren erfolgen, eine Prägung oder eine Prägeperforation kann mit entsprechenden Walzen durchgeführt werden, die nach dem Prinzip Patritze/Matritze arbeiten und dabei das Papier im Prägungsbereich weitestgehend überdehnen, gegebenenfalls bis zu einer Durchbrechung im Spitzenbereich der Prägeformen.

Weitere Merkmale der Erfindung sind Gegenstand von Unteransprüchen.

Im folgenden wird die Erfindung anhand verschiedener Ausführungsbeispiele noch einmal ausführlich erläutert.

Grundsätzlich wird beim Verfahren gemäß vorliegender Erfindung zunächst ein ungekrepptes Papier hoher Festigkeit hergestellt, welches danach durch Perforation und/oder Prägung bzw. Prägeperforation filtrierfähig gemacht wird.

Dabei kann ein Papier aus Sulfat- und/oder Sulfitzellstoff (auch CTMP oder TMP o. ä.) verwendet werden. Auch die Verwendung von Kurzfaserzellstoffen und Altpapier ist für bestimmte Anwendungen sinnvoll.

Es ist auch denkbar, ein Papier aus hoch gemahlenem Zellstoff, z. B. Standardsulfatzellstoff zu verwenden. Durch die starke Mahlung eines Standardsulfatzellstoffes wird ebenfalls eine hohe Festigkeit und Undurchlässigkeit bzw. zu geringe Durchlässigkeit für die Filtration von Kaffee oder Tee des Papieres erreicht, welches dann anschließend wieder durch Perforierung oder dergleichen filtrierfähig gemacht wird.

Unter Standardsulfatzellstoff ist im vorliegenden Zusammenhang ein Ausgangsmaterial zu verstehen, welches bislang für die Herstellung von Filterpapieren in gekreppter Ausführungsform verwendet wird.

Im Rahmen der vorliegenden Erfindung ist es sogar möglich, daß ein Pergamentbzw. Pergamin-Papier verwendet wird.

Dabei ist es vorteilhaft, wenn ein Pergamin-Papier mit einem Anteil von Naßfestmitteln verwendet wird.

Auch derartige Pergamin-Papiere, die für den hier vorgesehenen Einsatz im vorstehend beschriebenen Sinne optimiert sind, werden durch Perforation oder dergleichen filtrierfähig gemacht.

Aufgrund des Entfalls der Kreppvorrichtung und der damit verbundenen physikalischen Beschränkungen entfallen damit auch die für die Kreppapiere charakteristischen Geschwindigkeitslimits von Papiermaschinen.

Die Perforation und /oder Prägung bzw. Prägeperforation des Papiers kann sowohl ganzflächig wie auch nur bereichsweise durchgeführt werden.

Bei einer nur bereichsweisen Perforation oder Prägung bzw. Prägeperforation können durchlaufend gerade, wellenförmig oder zick-zack-förmig perforierte oder geprägte Streifen nebeneinander angeordnet sein, es ist aber auch möglich, Perforationen und /oder Prägungen bzw. Prägeperforationen in geometrisch begrenzten Zonen, die durch unbehandelte Zonen voneinander getrennt sind, vorzusehen.

Sofern das Papier ausschließlich durch Prägung filtrierfähig gemacht wird, kommt sowohl eine das Papier lediglich überdehnende wie auch eine das Papier perforierende Prägung in Frage. Auch hier können wiederum Streifen oder Zonen mit entsprechenden Prägungen vorgesehen sein, die durch ungeprägte Zonen oder Bereiche voneinander getrennt sind.

Im Rahmen des Erfindungsgedankens sind, wie vorstehend angedeutet, viele Möglichkeiten gegeben, ein relativ festes Papier mit den sich daraus ergebenden hohen möglichen Arbeitsgeschwindigkeiten filtrierfähig zu machen.

## Patentansprüche

1. Verfahren zur Herstellung eines Filterpapieres, insbesondere eines Filterpapieres für die Zubereitung von Brühgetränken wie Kaffee oder Tee, **dadurch gekennzeichnet, daß** zunächst ein ungekrepptes Papier hoher Festigkeit hergestellt und dieses Papier danach durch Perforation und/oder Prägung bzw. Prägeperforation filtrierfähig gemacht wird.

2. Verfahren nach Anspruch 1, **dadurch gekennzeichnet, daß** ein Papier aus Sulfat- und/oder Sulfitzellstoffen oder CTMP, TMP mit hohem Mahlgrad verwendet wird.

3. Verfahren nach Anspruch 1, **dadurch gekennzeichnet, daß** ein Papier aus Standardsulfatzellstoffen mit Kurzfaseranteil verwendet wird.

4. Verfahren nach Anspruch 1, **dadurch gekennzeichnet, daß** ein Pergamentbzw. Pergamin-Papier verwendet wird.

5. Verfahren nach Anspruch 4, **dadurch gekennzeichnet, daß** ein Pergamentbzw. Pergamin-Papier mit einem Anteil von Naßfestmittel verwendet wird.

6. Verfahren nach Anspruch 4 oder 5, **dadurch gekennzeichnet, daß** ein Pergament- bzw. Pergamin-Papier mit einem Zusatz von ungemahlenen Langfasern verwendet wird.

7. Verfahren nach einem oder mehreren der vorhergehenden Ansprüche, **dadurch gekennzeichnet, daß** eine Perforation und/oder Prägung bzw. Prägeperforation nur bereichsweise in Form von Streifen oder geometrisch begrenzten Zonen vorgesehen wird.

8. Verfahren nach Anspruch 7, **dadurch gekennzeichnet, daß** die streifenartig nebeneinander vorgesehenen, perforierten oder geprägten Streifen durchlaufend gerade, wellenförmig oder zick-zack-förmig ausgebildet sind.

9. Verfahren nach einem oder mehreren der vorhergehenden Ansprüche, **dadurch gekennzeichnet, daß** eine Prägung in Form einer das Papier überdehnenden Prägung durchgeführt wird.

10. Verfahren nach einem oder mehreren der vorhergehenden Ansprüche, **dadurch gekennzeichnet, daß** im Falle einer Prägung eine das Papier perforierende Prägung durchgeführt wird.
